# EUROPEAN PATENT APPLICATION

(11) **EP 4 810 844 A2**
(43) Date of publication of application: **23.09.2026**
(21) Application number: 26153178.4
(22) Date of filing: 04.12.2023
(51) Int. Cl.: F16L 33/22

(54) **A PLUMBING CONNECTOR**

(30) Priority: 06.12.2022 GB 202218293
(62) Document number(s) of the earlier application(s) in accordance with Art. 76 EPC: 23822084.2 / 4 630 721
(71) Applicant: Reliance Worldwide Corporation (UK) Limited, West Drayton, Middlesex UB7 8JL (GB)
(72) Inventor: ANSELL, Glen, Edgware, HA8 8HF (GB)
(74) Representative: Boult Wade Tennant LLP

(57) **Abstract**

A pipe connector comprises a hollow body 1 with a tubular part to seal with an inner diameter of a pipe P. A collet 3 with axially extending through slots 34 is axially fixed to the body 1 and forms a cavity for the pipe P. A locking cap 4 is screwed onto the collet to cause inward deflection of the collet onto the pipe and the pipe onto the tubular part to provide a seal. A transparent ring 5 is retained at the distal end of the collet 3, such that, when the locking cap 4 is locked and the pipe P is fully inserted, the pipe is visible through the through slots 34 and transparent ring. The locking cap 4 may not extend distally past the distal end of the cavity allowing the pipe P to be visible through the through slots 34 when the locking cap 4 is in the locked configuration. The locking cap 4 and hollow body 1 may have two pairs of stop faces 41,311, 43, 52 which engage when the locking cap reaches the locked configuration. A ring 5 may be retained on the collet by frangible elements 60 which break the when the locking cap goes beyond a fully locked position, but before it deforms the first screw thread. The locking cap 4 may have axial grooves 46 for receiving a tool which have a closed distal end, an open proximal end and a constant depth.

## Description

The present disclosure relates to a plumbing connector for use with a plastic pipe. More specifically, it relates a connector particularly suitable for use with multi-layered pipe (MLCP) for heating hot/cold water systems. However, it may be used for other types of pipe.

In particular, the present disclosure relates to developments to the connector disclosed in our own earlier WO 2022/018412 and WO 2022/018413.

These applications disclose a connector which can be used in commercial plumbing applications to replace conventional press-fit and push-fit connectors. These applications contain a more detailed discussion of the background art and the problems addressed, and their disclosure is incorporated by reference.

WO 2011/099519 discloses a metal connector for connecting with a braided hose. EP0206582 discloses an example of a well-known plastic hose connector. This prior has fundamentally different requirements from those of WO 2022/018412, WO 2022/018413 and the present disclosure in that they are designed to seal with pipes which are highly deformable and therefore can achieve good sealing and gripping by deflecting material of the hose itself.

The present disclosure relates to a number of modifications which have been made particularly to enhance the reliability of operation of the connectors of WO 2022/018412 and WO 2022/018413.

According to a first aspect of the present disclosure, there is provided a pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread;
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
wherein the collet has at least one axially extending through slot extending proximally from its distal end: and
a transparent ring retained at the distal end of the collet, such that, when the locking cap is in the locked configuration and the pipe is fully inserted, the pipe is visible, in use, through the through slot and transparent ring.

The presence of the transparent ring provides enhanced visibility of the pipe when fully seated in the locked connector in order to verify that it is correctly located. The transparent ring has a lensing effect which provides this enhanced visibility.

Optionally the outer surface of the transparent ring is an inclined surface facing the pipe, in use, with the locking cap in the locked configuration and with the pipe fully inserted. This provides a continuous surface which faces the position where the end of the correctly inserted pipe should be. This enhances the visibility of the pipe in this position.

In WO 2022/018412 and WO 2022/018413, the connector is designed to be tightened to a progressively greater degree to provide a steadily increasing force to indicate to the operator that they are approaching the locked configuration. These connectors also provide a visual indication in which the collet (which is a different colour from the cap) is exposed at the proximal end of the connector in the locked configuration.

Optionally, the locking cap, in the locked configuration does not extend distally past the distal end of the cavity. This forms a second aspect of the present disclosure.

According to a second aspect of the present disclosure, there is provided a pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
wherein the collet has at least one axially extending through slot extending proximally from its distal end, and:
   wherein the locking cap, in the locked configuration does not extend distally past the distal end of the cavity allowing the pipe to be visible, in use, through the through slot when the locking cap is in the locked configuration.

In WO 2022/018412 and WO 2022/018413, the collet is provided with through slots and is configured such that the presence of the pipe is visible through the slots and the distal end of the collet even when the locking cap is in the locked configuration. However, the locking cap extends distally beyond the end of the cavity for the pipe. This is done because the collet is a different colour from the locking cap such that the cap passes the end of the collet and provides a visual indication that the cap is in the locked configuration.

In the second aspect of the disclosure, because the locking cap does not extend distally past the end of the cavity for the pipe, the angle at which the end of the pipe can be seen around the end of the locking cap is significantly increased thereby providing improved visibility of the pipe in the locked configuration.

Optionally, the collet may be the same colour as the locking cap. This is possible because the colour contrast between the cap and the collet is no longer required to provide a visual indication of the locking cap having reached the locked configuration. Optionally, therefore, the collet may be black. Conventionally the pipes are white, so the use of a black collet helps with the visibility of the pipe to provide the best possible contrast between the pipe and the collet.

When the first and second aspects of the disclosure are combined, this further optimises the visibility of the fully seated pipe in that the combination of the collet not extending distally past the end of the cavity and the lensing effect of the transparent ring provides significantly improved visibility of the end of the fully located pipe.

According to a third aspect of the present disclosure, there is provided a pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
the locking cap having a first proximal stop face at a proximal end and a first distal stop face at a distal end,
complementary proximal and distal second stop faces are fixed with respect to the hollow body, wherein the first stop faces engage with the respective second stop faces when the locking cap reaches the locked configuration to prevent further movement of the locking cap onto the body.

By providing stop faces, the present disclosure provides a much more obvious and abrupt end point to the locking process. This allow operators working at high speed simply to screw on the locking cap until the end stops are reached at which point they become aware of a very abrupt increase in the force thereby providing a clear tactile indication that the connector is fully locked. By providing both proximal and distal stop faces, the load on the locking cap is more widely distributed thereby decreasing the possibility/reducing the probability of overstressing any part of the connector. If the operator continues to try to screw the locking cap onto the collet beyond the locked position, a tool may be provided which will disengage or slip once the applied torque exceeds a particular threshold. Suitable tools are described in our own earlier application GB2204791.4.

The use of such a tool is enhanced in the present disclosure in which the increase in torque once the locked position is reached is much more abrupt than in the prior art for the reasons set out above. This ensures a more reliable operation of the torque limiting feature on the tool.

Optionally, the locking cap is provided with interference features which are radially spaced from the first distal stop face and which engage with complementary features which are fixed with respect to the hollow body to provide a tactile force as the locking cap approaches the locked configuration. This provides the operator with a tactile indication that they are close the locked configuration such that they are aware that the locking cap does not need to be turned much further before the locked configuration is reached.

The reference to a "stop face" is reference to a face which is generally perpendicular to the axis of the connector which is positioned to provide an abrupt stop to the motion of the component as opposed to a ramped engagement which provides a resistive force which increases as the component is tightened. The stop face does not need to be directly in the perpendicular plane to achieve this abrupt stop.

As described above, the collet may have at least one axially extending through slot extending proximally from its distal end: and the connector may further comprise a transparent ring extending between the hollow body and the distal end of the locking cap when the locking cap is in the locked configuration allowing the pipe to be visible, in use, through the through slot and transparent ring when the locking cap is in the locked configuration.

In this case, the distal second stop face may be provided on the transparent ring. Alternatively, the distal second stop face may be on the body or collet.

According to a fourth aspect of the present disclosure, there is provided a pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread;
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
a ring retained on the outer face of a distal end of the collet by at least one frangible element on the collet, the ring being positioned such that it will break the frangible element and be pushed off the collet when the locking cap reaches a position beyond a fully locked position, but before a position in which the locking cap deforms the first screw thread.

This provides an alternative to the stop faces of the third aspect of the disclosure. In this case, as the locking cap is screwed into place, the operator will normally stop screwing the locking cap to the fully locked position and stop there. This is a question of experience and feel, as the torque required to move the locking cap beyond the fully locked position increases providing a tactile indication that fully locked position has been reached. This may also be helped by the use of a torque limiting tool.

However, in the event that the locking cap is overtightened, this will cause the frangible element to break, and the ring is pushed off of the collet. The fact that this happens before the threads can deform means that there is a visual indication that the locking cap has been overtightened in the form of the displaced ring, even though the connector is still fully locked (because the threads have not deformed). In practice, the connector can be configured so that it cannot, in practice, be moved to a position in which the threads will deform as the torque required to do this is too high to be reached in practice.

Thus the operator will learn that they have overtightened the locking cap because the ring has become detached, and/or an inspector will have a visual indication that there may be an overtightening issue that should be investigated, despite the fact that the connector can still continue to fulfil its function.

Without the frangible element, an operator could routinely overtighten the locking cap, and they and/or any subsequent inspector would be none the wiser.

Optionally the ring is a transparent ring.

Optionally the locking cap is provided with interference features which are radially spaced which engage with complementary features which are fixed with respect to the hollow body to provide a tactile force as the locking cap approaches the locked configuration. This provides a tactile indication to the operator that they are approaching the fully locked position which helps prevent overtightening.

In WO 2022/018412 and WO 2022/018413, the locking cap is rotated with a tool which engages with axial grooves on the end cap.

According to a fifth aspect of the present disclosure, there is provided a pipe connector comprising:
a hollow body having a central throughway defining an axis, the body comprising a tubular part at at least one end, the tubular part having an outer face to seal, in use, with an inner diameter of a pipe placed over the tubular part:
   a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
wherein the locking cap is provided on its outer face with a plurality of axial grooves for receiving a tool, the grooves having a closed distal end and an open proximal end and having a constant depth between the distal and proximal ends.

The constant depth of the grooves provides for reliable engagement of the tool with the locking cap.

Optionally, one or more of the hollow body, collet, and locking cap may be made of plastic.

Optionally, the locking cap may be captive on the collet.

Optionally, the inner face of the collet may have at least one tooth to grip the pipe, in use.

Optionally in use, in the locked configuration, there is no axial movement between the body, collet, locking cap and pipe.

Optionally the connector is capable of maintaining the seal when exposed to a continuous temperature of 70°C, preferably 80°C and more preferably 90°C.

Optionally at least one of the body, collet and locking cap have a tensile modulus of greater than 2000Mpa and a heat distortion temperature of greater than 200°C.

Optionally all of the body, collet and locking cap have a tensile modulus of greater than 2000Mpa.

Optionally the locking cap is devoid of opposing flat surfaces.

Optionally no part of the locking cap has a hexagonal cross section in a radial plane.

The different aspects of the disclosure may be used in isolation or combined as appropriate. The above optional features may be used with any of the aspects of the disclosure.

An example of a pipe connector in accordance with the presence disclosure will now be described with reference to the accompanying drawings, in which:
Figure 1A side view of a connector and two pipes with the connector in its unlocked configuration and prior to insertion of the pipe;
Figure 1B is a view similar to Figure 1A with the pipes inserted into the connector;
Figure 1C is a view similar to Figures 1A and 1B in the locked configuration;
Figures 2A to 2C are views which are similar to Figures 1A to 1C in part cross-sectional form showing internal features of the collet and pipe;
Figures 3A to 3C are perspective views of the connector and pipe corresponding to Figures 1A to 1C;
Figure 4A is a perspective view of the connector with one end in an unlocked configuration and the other end shown in an exploded configuration;
Figure 4B is view similar to Figure 4A with the other end shown in an unlocked configuration and the one end shown in an exploded configuration;
Figure 5 is a perspective view of the body, collet and transparent ring without the locking cap;
Figure 5A shows the detail of the circle A in Figure 5;
Figure 6 is a cross-section of the connector in the position shown in Figure 1B with the two pipes inserted and in the unlocked configuration;
Figure 6A shows the detail in the rectangle A in Figure 6;
Figure 7 is a view corresponding to Figure 6;
Figure 7A shows the detail of rectangle A in Figure 7;
Figure 8 is a view similar to Figure 7 in which the cross-section is taken in a plane through an axially extending slot in the collet;
Figure 8A shows the detail in the rectangle A in Figure 8;
Figure 9 is a cross-sectional view in the same plane as Figures 6 and 7 showing the connector in a locked configuration;
Figure 9A shows the detail in rectangle A in Figure 9;
Figure 10 corresponds to Figure 9;
Figure 10A shows the detail in the rectangle A in Figure 10;
Figure 11 is a cross-sectional view in the same plane as Figure 8 showing the connector in the locked configuration;
Figure 11A shows the detail in rectangle A in Figure 11;
Figure 12A is a side view of the locking cap;
Figure 12B is an end view of the locking cap;
Figure 12C is a side view of the transparent ring;
Figure 12D and 12E show alternative arrangements in the circle of Figure 12C;
Figure 12F is an end view of the transparent ring;
Figures 13A to 13C are views similar to Figures 3A to 3C showing a second connector;
Figures 14A and 14B are views similar to Figures 4A and 4B showing the second connector;
Figures 15 and 15A are views similar to Figures 7 and 7A showing the second connector; and
Figures 16 and 16A are views similar to Figures 10 and 10A showing the second connector.

The plumbing connector described below shows a double-ended axial connector in which both ends are configured according to the present disclosure. The connector may be applied to other shapes such as single end, a right-angled or T connector. Further, the connector may be provided at only one end and the opposite end may have a different type of connection or be integrated into some other component such as a valve or other fitting connection.

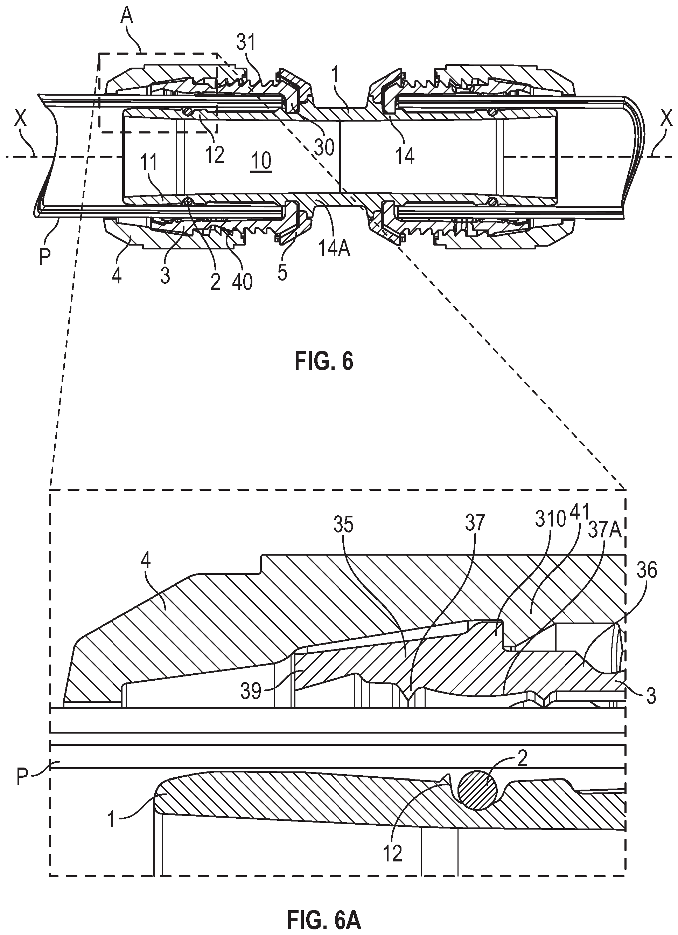

The connector is a plumbing connector for use with a plastic pipe P. This may be a single layer plastic pipe but is more commonly a multi-layered pipe (MLCP). As can best be seen, for example, in Fig. 6A, the multi-layered pipe has a number of layers L, typically inner and outer polymeric layers and an intermediate layer of a metal such as aluminium.

Plumbing connectors must be suitable for being used in both cold and hot water systems as well as in heating systems. As such, they must be able to cope with a continuous temperature of 95°C and must also be able to cope with temperatures of above 100°C for short periods.

The connector is made from five components, namely a body 1, an O-ring 2, a collet 3, a locking cap 4 and transparent ring 5. The body 1 is a double-ended body such that it has an O-ring 2, collet 3, locking cap 4 and transparent ring 5 at either end.

The components are preferably high performance polymers. For example the body 1 may be unfilled PPSU/PSU/PPS/PVDF. The locking cap 4 and collet 3 may be the same materials but these may be glass filled. Other possibilities for the cap and collet may be GF PA66/PA12/Amodel/Grivory' or other suitable polymeric materials. The transparent ring 5 may be Grilamid or fiber reinforced polymer, preferably polycarbonate oy polyester.

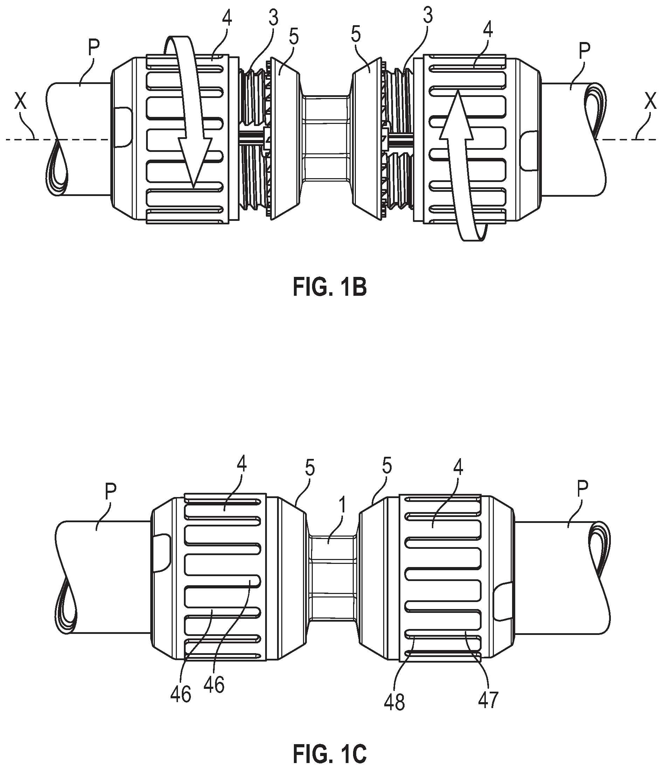

The body 1 has a generally tubular configuration with a throughway 10 extending axially along a main central axis X (Fig. 1B). At the proximal end (i.e. the end closest to the open end of the connector, the distal end being the opposite end furthest from the open end), the body 1 has a tubular portion 11 over which the pipe P is received as shown, for example, in Fig. 6. Part way along the tubular portion 11 is an annular groove 12 which receives the O-ring 2. As shown in various figures, the O-ring 2 seals with the inner diameter of the pipe P.

The collet 3 has a lip 30 at one end via which it is received, for example as a snap fit into a groove 14 in the body 1. The outer face of the collet 3 is provided with a screw thread 31. The locking cap 4 has a complementary screw thread 40 such that the locking cap 4 can be rotated with respect to the collect to lock the connector as described in greater detail below. As well as the screw-threaded engagement, the locking cap 4 is also captive on the collet 3.

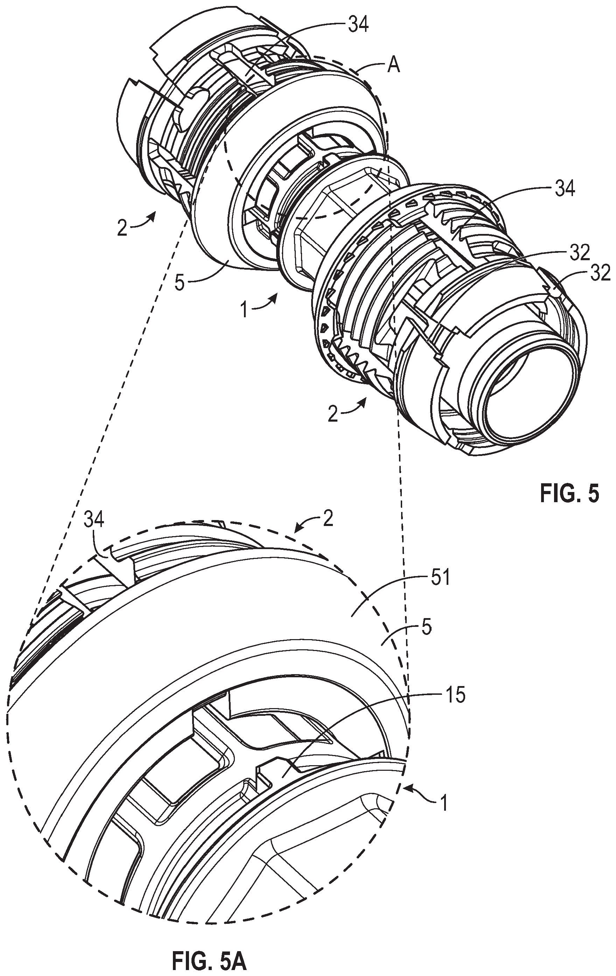

The collet 3 is provided with a plurality of first axial slots 32 extending distally from the proximal end. A plurality of second axial slots 34 extend proximally from the opposite distal end of the collet and these axially overlap with the first axial slots 32 but are circumferentially offset with respect to these slots. The collet 3 is made of a relatively rigid material and the slots provide the necessary flexibility for the collet to be fitted in place. This is done by forcing the collet 3 over the tubular portion 11 (as shown in Fig. 5) until the lip 30 snaps in the groove 14. A number of detents 15 are provided at the distal end of the tubular portion 11 which engage in the ends of the second axial slots 34 to substantially prevent or inhibit rotation of the collet 3 with respect to the body 1. The collet 3 is thereby axially and radially fixed with respect to the body 1.

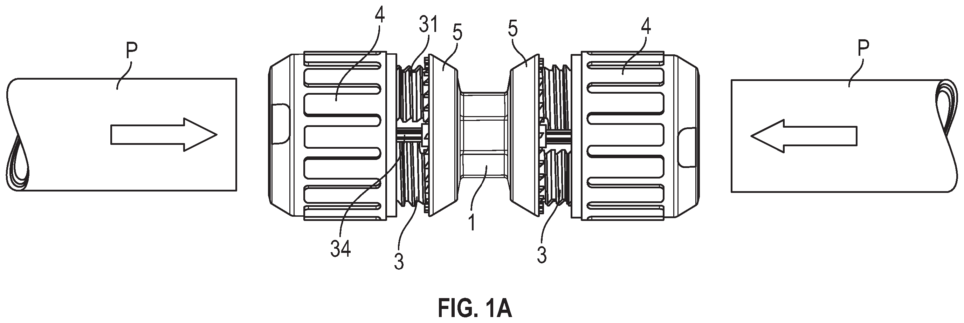

With the collet 3 fixed in place, the locking cap 4 is then pressed on to the collet 3. The first axial slots 32 allow the distal end of the collet to compress and allow the locking cap 4 to be pressed onto the collet at least until some of the part of the screw thread 31 engages with part of the screw thread 40. The collet may be pushed to a desired location at which the two screw threads 31, 40 begin to engage. However, for a more reliable engagement, the locking cap 4 is pressed onto the collet beyond the unlocked position and the locking cap 4 is then screwed back to the unlocked position shown in Fig. 1A. When the locking cap 4 is in the unlocked position, an inwardly extending annular shoulder 41 engages with a complementary outwardly extending shoulder 310 on the collet as best shown in Fig. 6A. This provides a stop to ensure that the locking cap 4 cannot be unscrewed beyond this unlocked position, thereby holding the locking cap 4 captive on the collet 3.

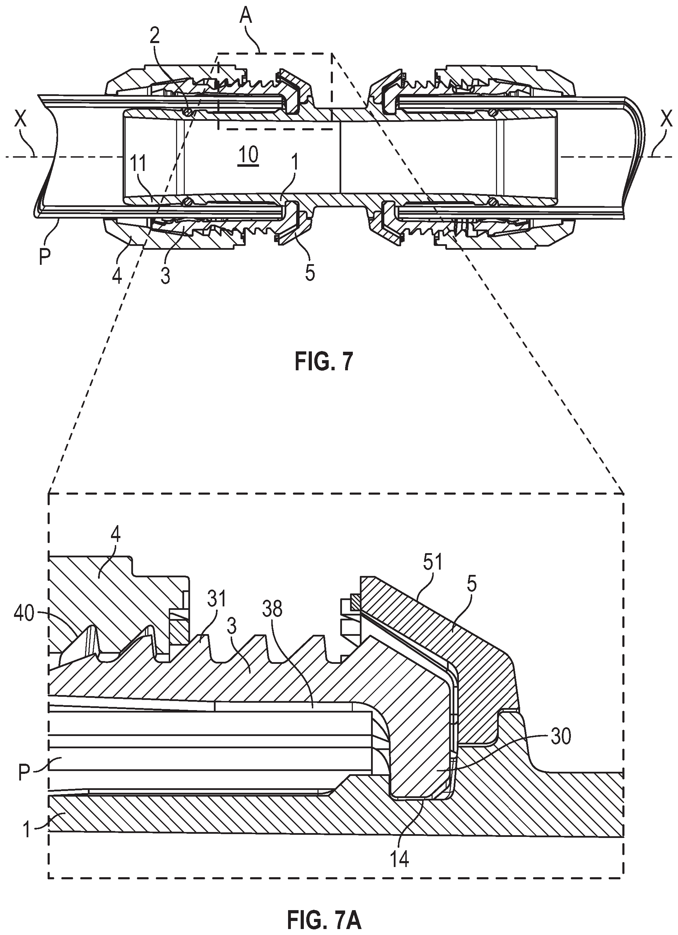

The first axial slots 32 also serve to separate the proximal end of the collet 3 into separate legs 35 e.g., four separate legs 35. There could be a different number of first axial slots 32 and therefore a corresponding different number of legs 35, such as three or five etc. Each leg 35 has an inner tooth 36 and an outer tooth 37 closer to the proximal end of the collet than the inner tooth 36 (Fig. 6A). Distally of the inner tooth 36 is a pipe receiving portion 38 (Fig. 7A) with an inner diameter which corresponds to the outer diameter of the pipe P. The collet has an inward bulge 37A between the two sets of teeth. In the unlocked configuration shown, for example, in Fig. 6A, at the distal face of the connector, the inner diameter is significantly larger than the outer diameter of the pipe P. This can be seen in Fig. 6A where the innermost edge 39 of the proximal end of the collet is spaced from the pipe P. This provides an indication that the pipe is fully inserted both before and after the connector is locked. The ability to view the pipe directly enhances the reliability of this operation compared to a visual indicator which relies on seeing a secondary component.

The connector is supplied in this unlocked configuration to an end user. This configuration of connector is depicted in Figs 1A, 2A, 3A, 6, 6A and 6A.

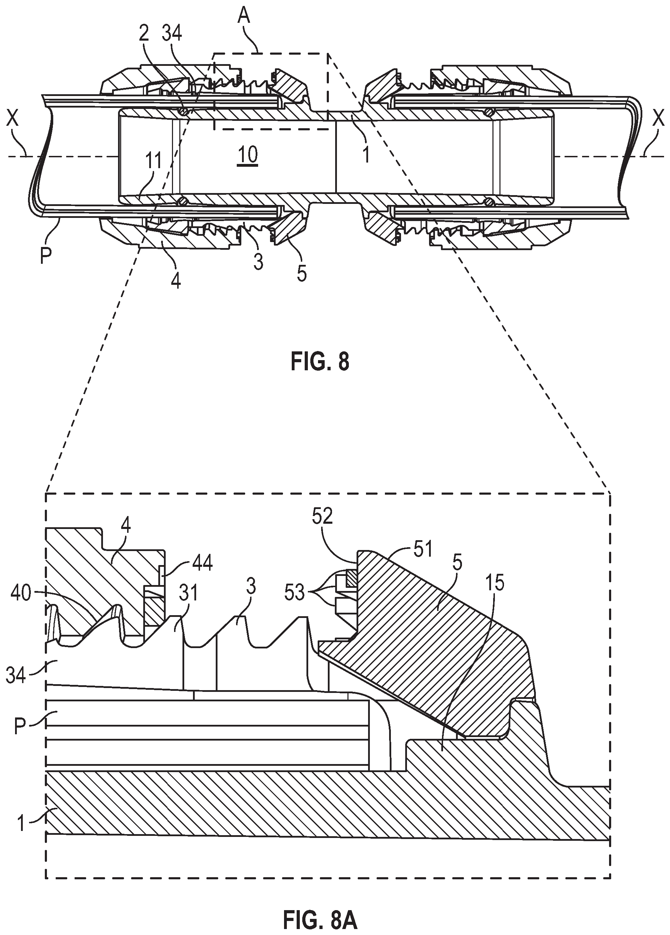

In this unlocked configuration, the pipes P can be inserted into the connector. They are fully inserted to the position shown in Fig. 6 and Fig. 8.

The connector is specifically designed to provide a low insertion force for the pipe P. A number of features of the design allow for this. These are described in WO2022/018413 (incorporated by reference). This also describes a mould for making the collet.

The connector is provided with a number of features which are designed to provide a more reliable operation of the device by an installer.

The transparent ring 5 is fitted onto the body 1 in front of the collet 3 which holds it in place as shown in Figure 6 against a flange 14A which is distal of the groove 14. The transparent ring 5 has an annular shape and is provided with a generally frustoconical face 51.

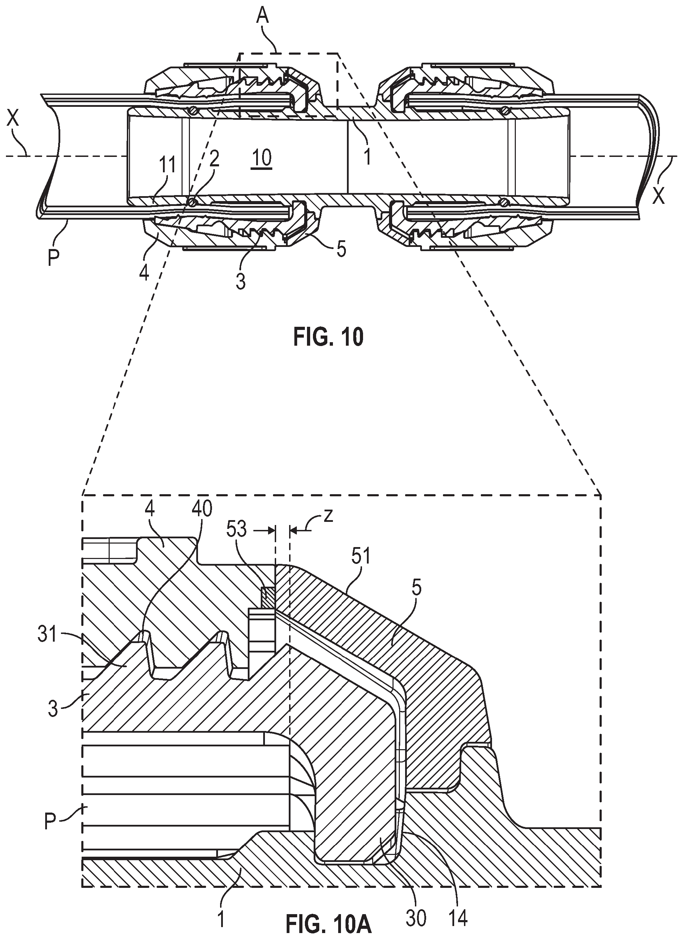

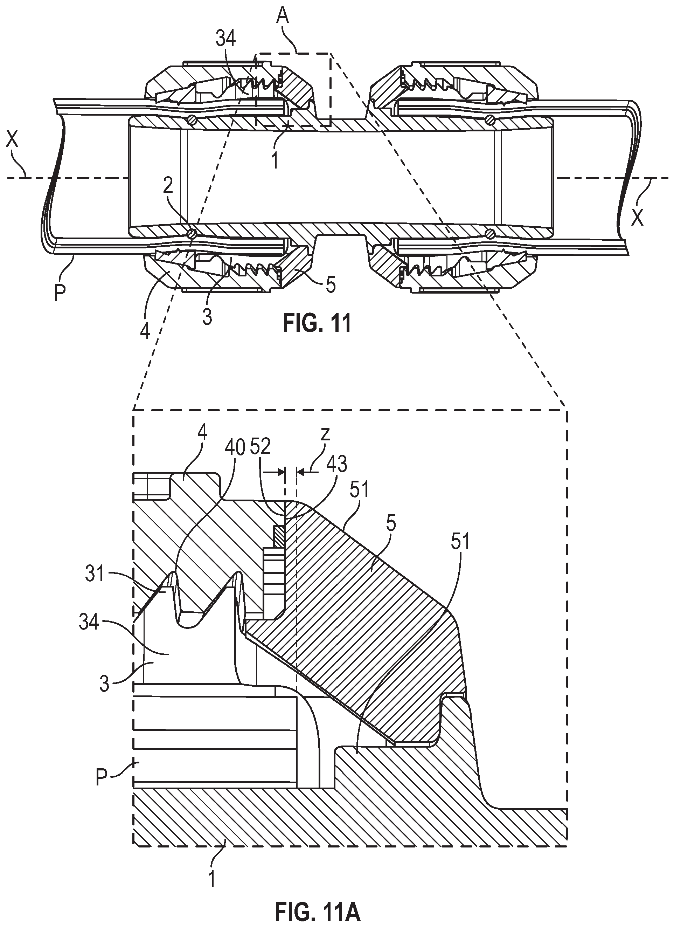

As seen in Figures 10A and 11A, the end of the pipe P in the fully inserted position extends distally beyond the end of the locking cap 4 in the locked configuration by a small amount Z. The frustoconical face 51 of the transparent ring 5 is oriented to face the exposed end to the pipe P. This allows the end of the pipe P to be clearly viewed by an operator. This is particularly the case when there is a high contrast between the pipe P, which is typically white, and the body 1 and collet 3 which can be in dark colour, preferably black.

Figure 10A is a cross-section in a plane away from the second axial slot 34 such that, in this plane, the pipe P cannot be seen from outside the connector as it is obstructed by the collet 3. Figure 11A is a cross-section in a plane containing a second axial slot 34. In this position, there is a direct line of sight through the transparent ring 5 and the end of the slot 34 to the end of the pipe P.

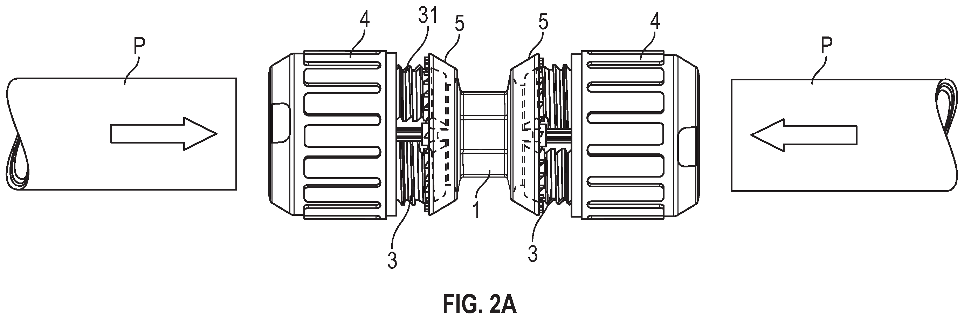

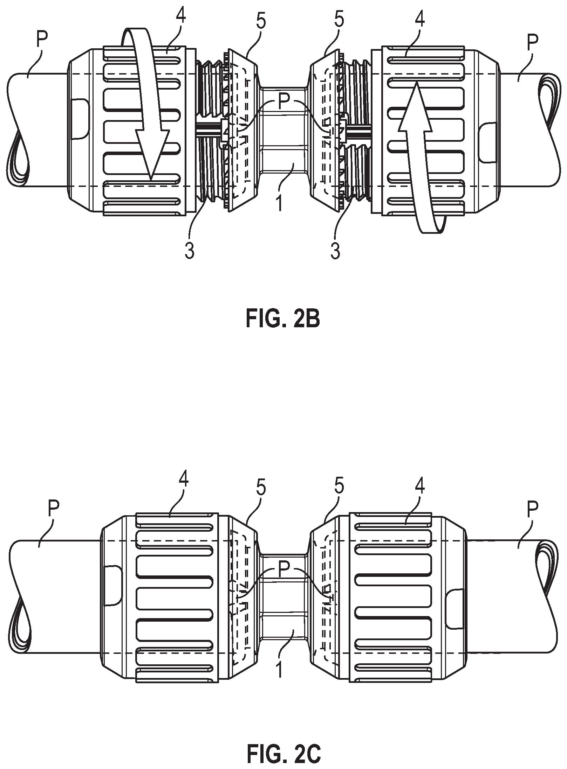

This is depicted in Figures 2B and 2C which the locations where the pipe P is visible at the distal end of the connector depicted with reference numeral P. This represents a location corresponding to one of the second axial slots 34. In the illustrated embodiment there will be three other such positions, one of which is on the diametrically opposed side of the connector shown in Figures 2B and 2C, and two others which are at the top and bottom of the connector in Figures 2B and 2C such that there are four viewing locations or visible areas through which the pipe is visible, though other configurations are possible without departing from the present disclosure.

As is apparent from Figure 11A, the pipe P could terminate in the same plane as the end plane of the locking cap 4, or slightly proximally of this plane, and still be visible through the transparent ring 5 to a lesser extent. Similarly, if the transparent ring 5 were absent, the end of the pipe P extending beyond the locking cap 4 would be visible in the absence of the transparent ring 5. However, a combination of the two features provides optimal visibility as the pipe P extends beyond the end of the locking cap 4 and the transparent ring 5 provides a lensing effect which enhances the view of the end of the pipe P.

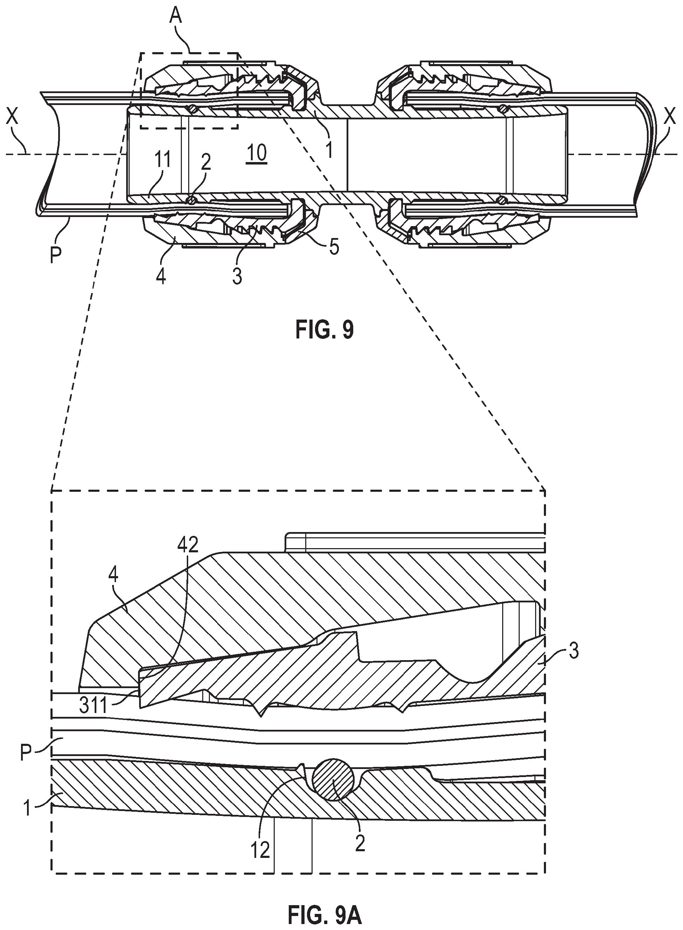

In order to substantially prevent, reduce or inhibit over-tightening of the locking cap 4 onto the body 1, two pairs of complementary end stop faces are provided. With reference to Figure 9A, a first stop face 42 is provided adjacent to the proximal end of the locking cap 4. The proximal end face of the collet 3 has a complementary second stop face 311. The stop faces are in a plane extending generally perpendicular to the axis X.

As shown in Figure 11A, the distal end face 43 of the locking cap 4 provides a first distal stop face. A second complementary stop face 52 is provided on the transparent ring 5. Again, both of these faces 43, 52 are provided in a plane which is generally perpendicular to the axis X.

This is done in order to provide an abrupt stop for the locking cap 4 when it reaches the locked position. The constructions of the collet 3, locking cap 4 and transparent ring 5 are such that both pairs of end stops are engaged at generally the same point of travel of the locking cap 4. This displaces or spreads the force or applied stress across of the connector such that localised stresses are reduced.

The stop faces do not need to be directly in a plane which is perpendicular to the axis X. The purpose of these stop faces is to provide an abrupt stop for the components rather than being a gradual increase of force as will occur when one component forms a ramp over which the other will ride during the tightening process in order to provide an ever-increasing tightening force. Such a feature is provided, for example, at the distal end of the connector of WO 2020/018412 and WO 2020/018413. By contrast, the present disclosure provides an abrupt stop rather than a ramped increase in the end force.

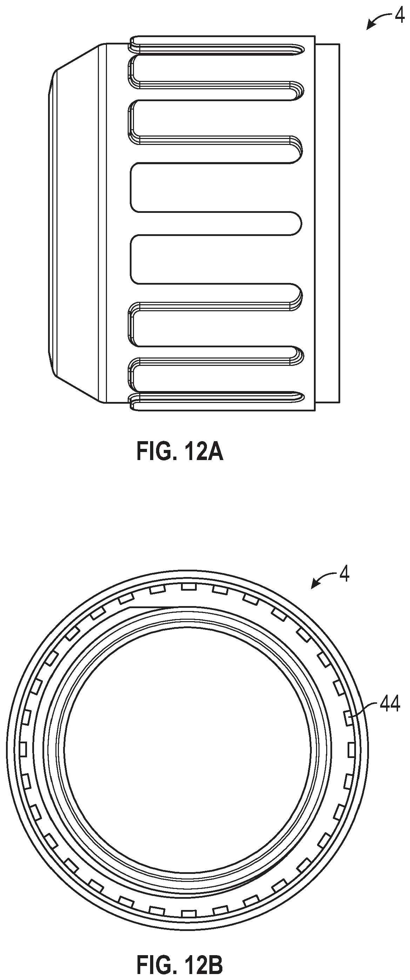

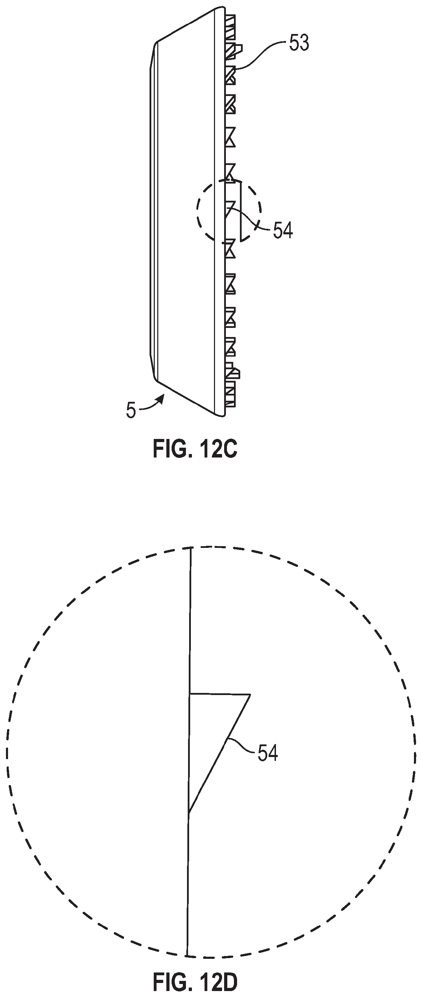

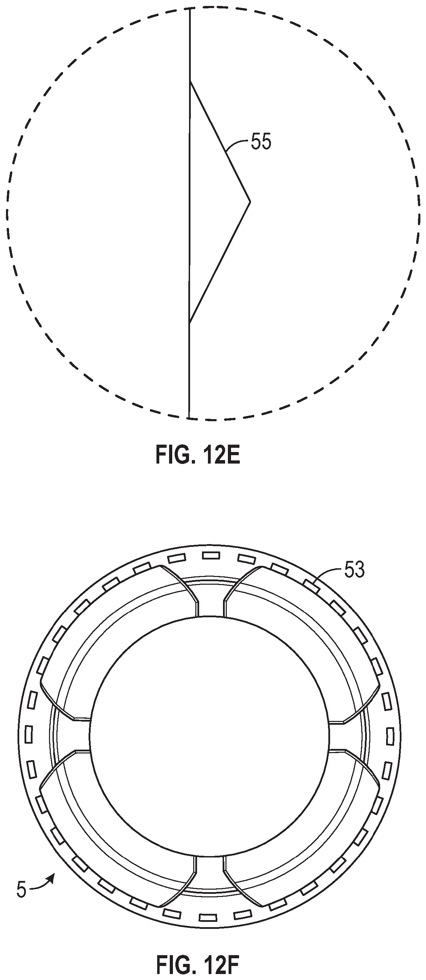

A further feature to prevent over-tightening is provided by a plurality of teeth 53 which extend proximally from the proximal face 52 of the transparent ring 5 as best shown in Figures 8A and 12C. The distal face 43 of the locking cap 4 is provided with corresponding recesses 44 as shown in Figures 8A and 12B. The teeth 53 may have the ramp shape 54 shown in Figure 12D if the connector is intended as a single use connector or double ramp shape 55 shown in Figure 12E if the connector is to be reused. The ramp shape 54 can also give useful diagnostic information in the event of a connector failure as will undergo irreversible deformation which can demonstrate, after the event, whether the connector was properly locked. As can be seen particularly in Figure 11A, the teeth 53 and recesses 44 are radially offset from the stop faces 43 and 52. The teeth 53 and recesses 44 may be inverted such that the teeth are on the locking cap 4 and the recesses are on the transparent ring 5.

With the pipe P inserted into the connector, the locking cap 4 is screwed towards the locked configuration. As it gets close to the locked position, the teeth 53 will engage in the corresponding recesses 44 such that the operator will feel and possibly also hear the effect of this mechanism.

The operator is therefore provided with a warning that they are approaching the locked position. Although this is useful as it may cause the operator to slow the rate at which they rotate the locking cap 4, it is not necessary for this feature to be provided. When the locked position is reached, the two pairs of stop faces 311, 42 and 43, 52 prevent over-tightening of the locking cap 4.

If the connector is being made up by hand, it is not possible for the locking cap 4 to be over-tightened as the geometry of the connector can be made such that it is not possible to advance the locking cap 4 any further using only a manual force. In the event that the user is using a tool, the tool can be provided with a torque limiting feature which can limit the torque which can be applied via the tool at a level well below that which is likely to cause damage to the connector.

Thus, the operator just needs to screw down the locking cap 4 until it cannot be tightened further. They will be well aware that this happened once they reach the end stops and may also have an optional warning from the teeth 53 and grooves 54 when approaching this position. As this does not solely rely on any visual indicators, it can be more reliable than a mechanism which does.

Further, once the locking cap 4 is fully tightened, the operator can easily view the end of the pipe P through the transparent ring 5 to provide reassurance that the pipe P is correctly located. This can be substantially more reliable than a connector which only relies on the movement of a secondary component in order to verify the correct location. Also, the above described arrangement of the shorter locking cap 4 and the presence of a transparent ring 5 means that the presence of the pipe P can be verified even when the connector is being used in a tight or cluttered space.

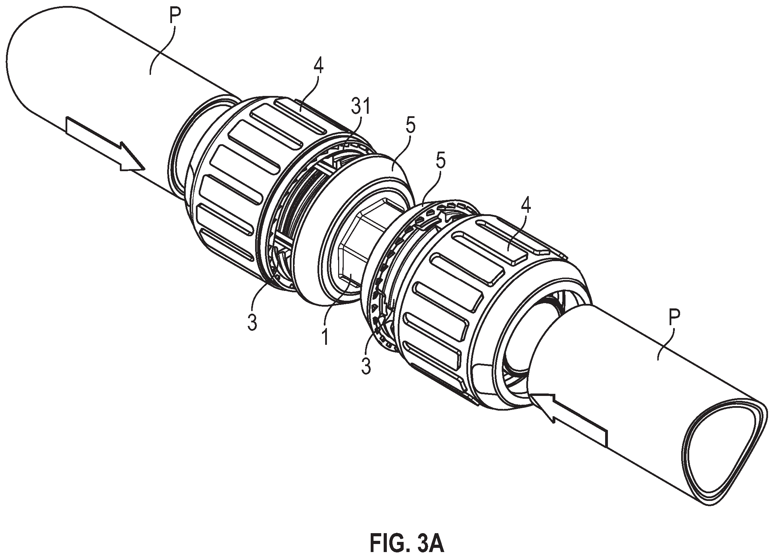

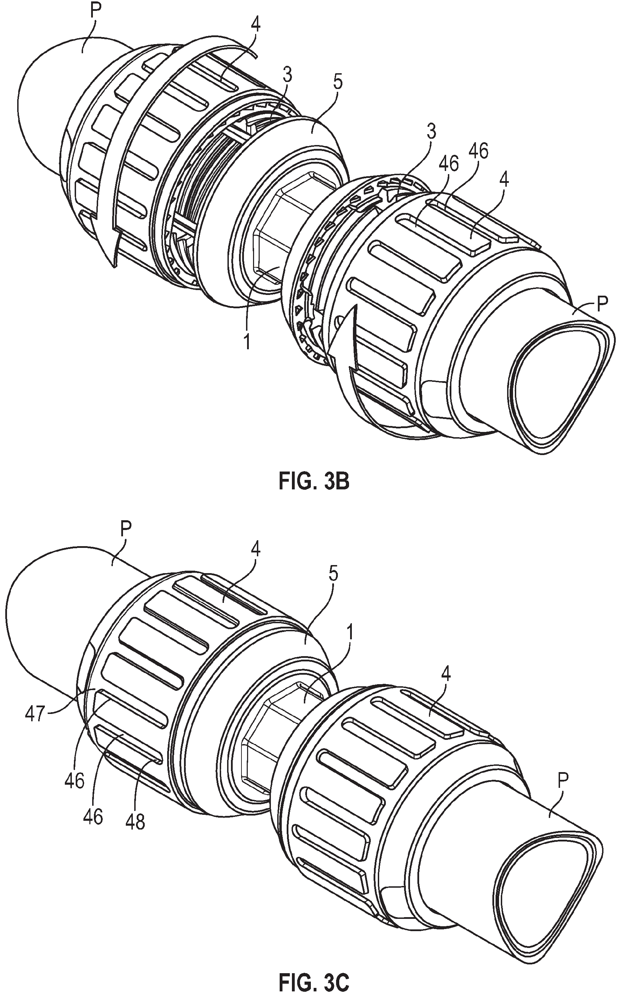

The locking cap 4 is provided with a plurality of axially extending grooves 46 which are designed to allow the application of a tool which has a complementary geometry. The grooves 46 are open at the proximal end 47 and closed at the distal end 48 such that the tool can be slid in the distal direction onto the locking cap 4 until it reaches the closed end 48. Alternatively, the tool may be applied in a radial direction. As will be apparent from Figures 3A to 3C, the grooves 46 have a uniform depth along their length. Thus, whichever part of the groove 46 the tool engages with, it will have a uniform and reliable interaction with the end cap 4 such that the tool can reliably rotate the end cap 4 with the possibility of slippage or twisting of the tool being minimised.

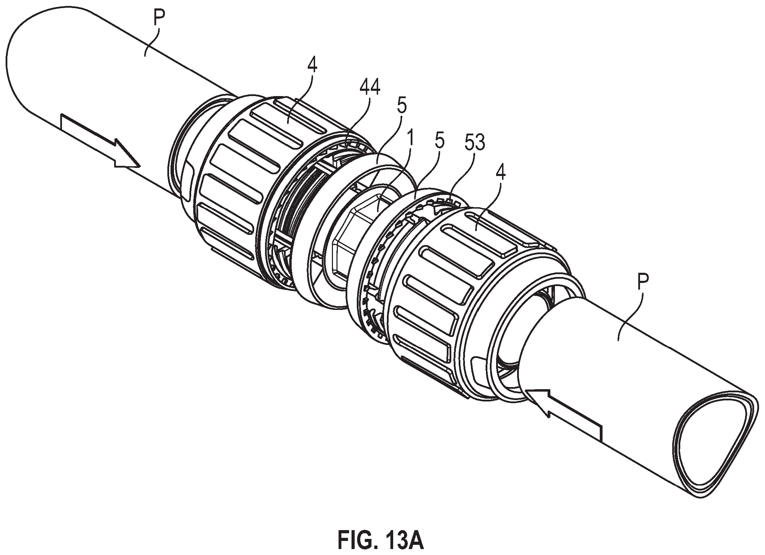

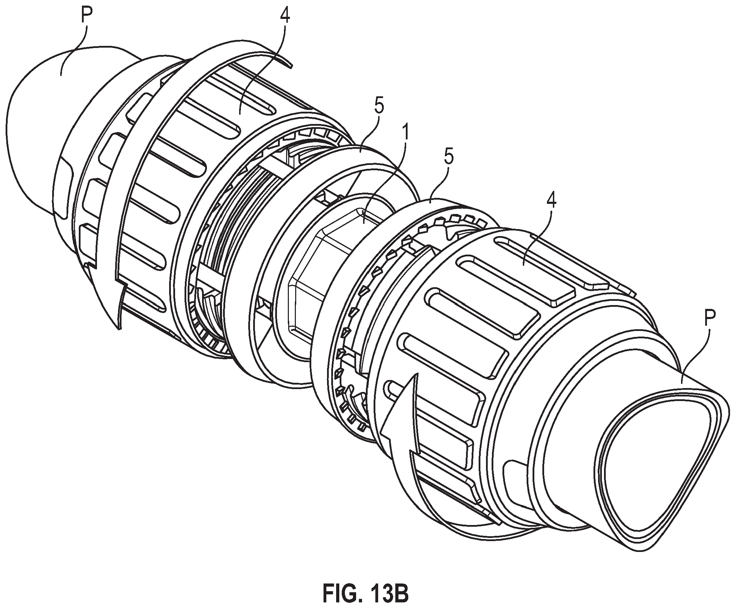

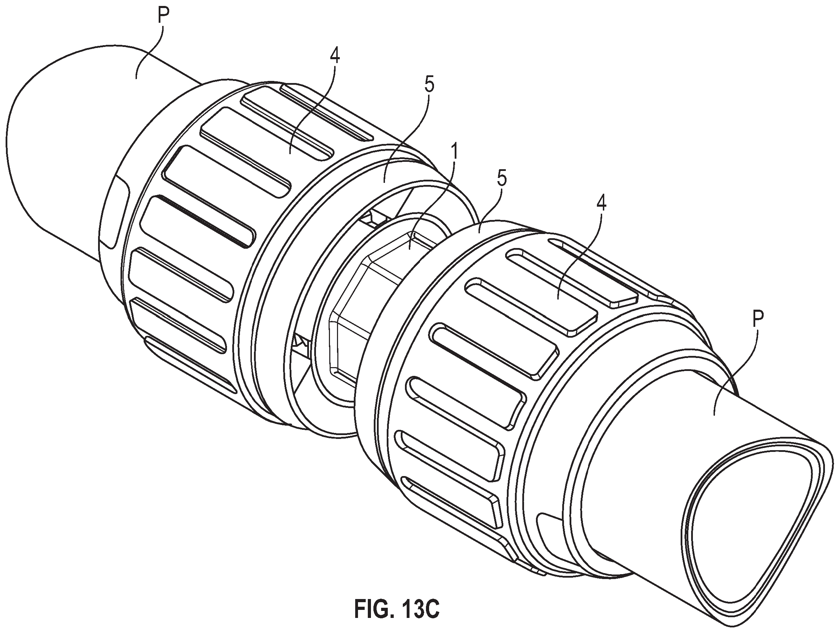

A second connector will now be described with reference to Figures 13A to 16A.

This shares many common features with the first connector as will be apparent from the drawings and only the differences will be described below. The same reference numerals are used to designate corresponding components.

The second connector embodies the fourth aspect of the disclosure which is an alternative to the third aspect shown in the first example. In this case, the stop faces of the first example are replaced by alternative features described below to address the issue of overtightening.

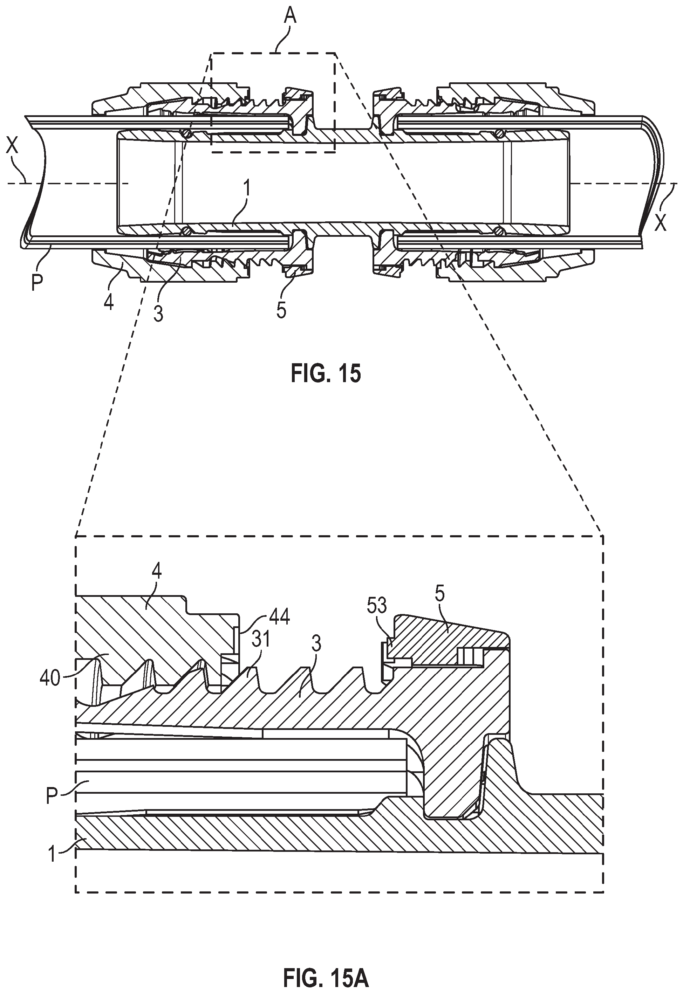

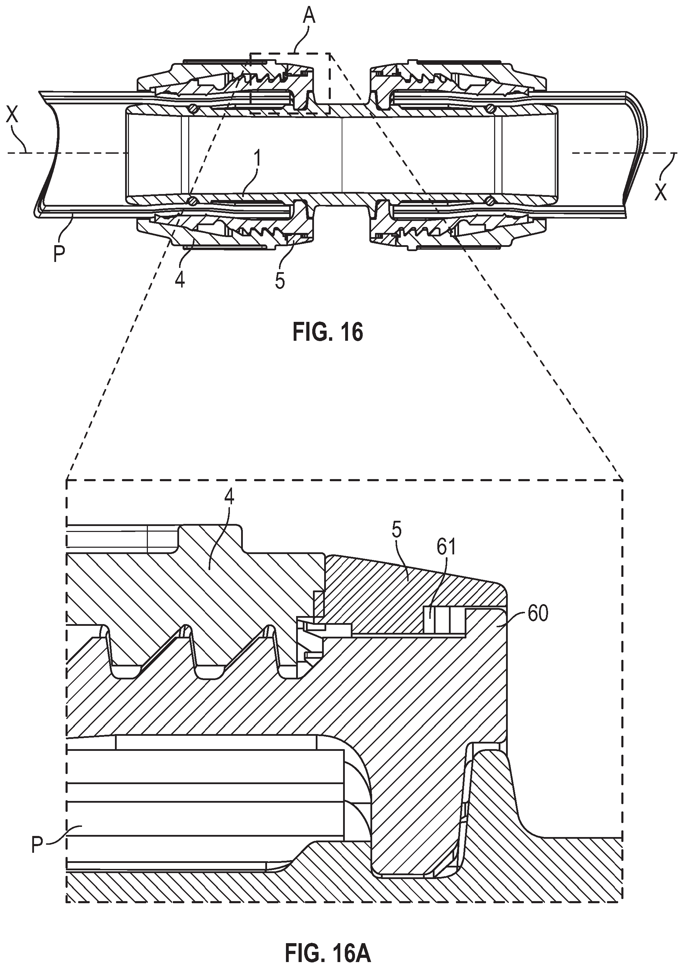

The transparent ring 5 is now mounted on the outside of the collet 3 as shown in Figures 15A and 16A. It is positioned such that the end of the pipe is visible through the ring 5 and slots 34 as described above.

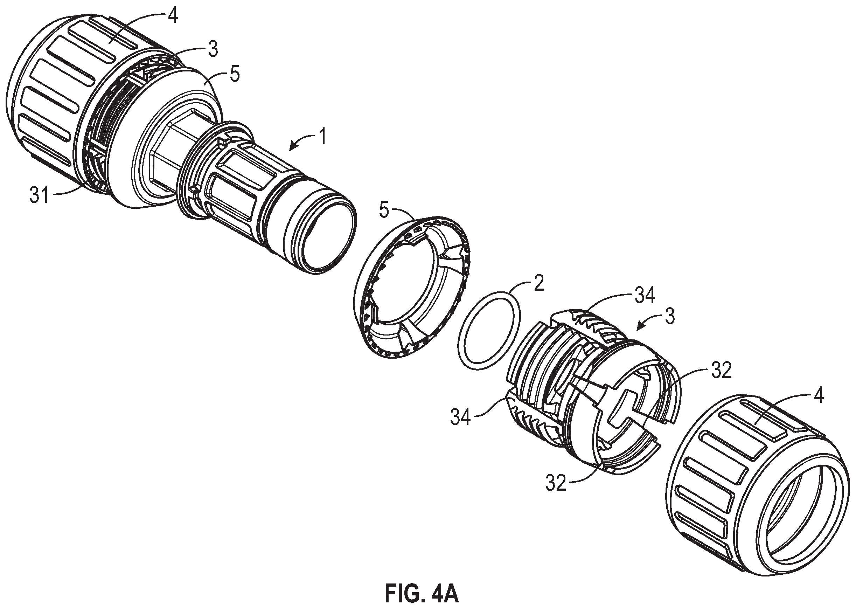

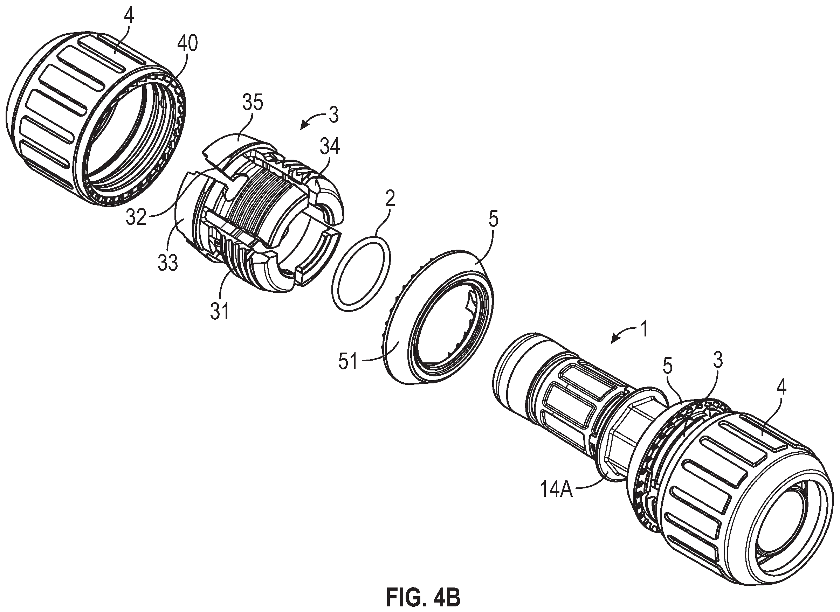

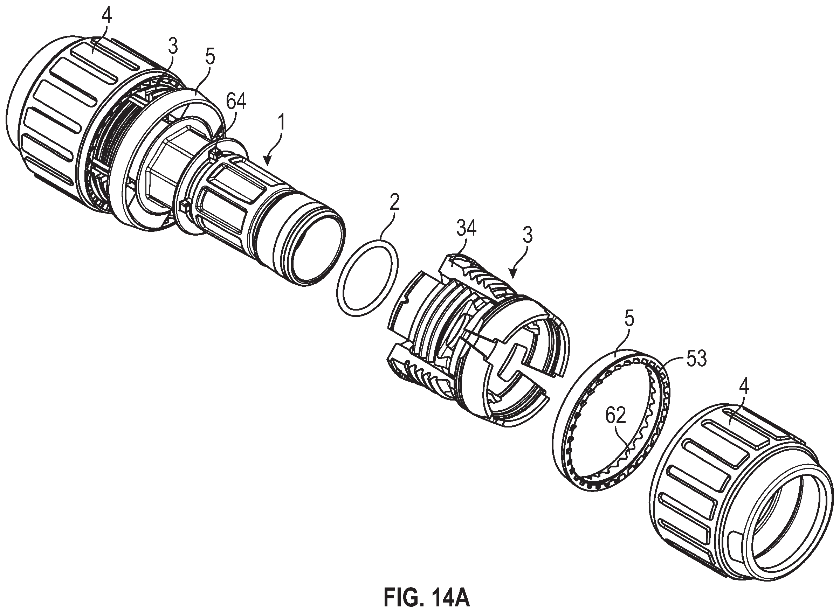

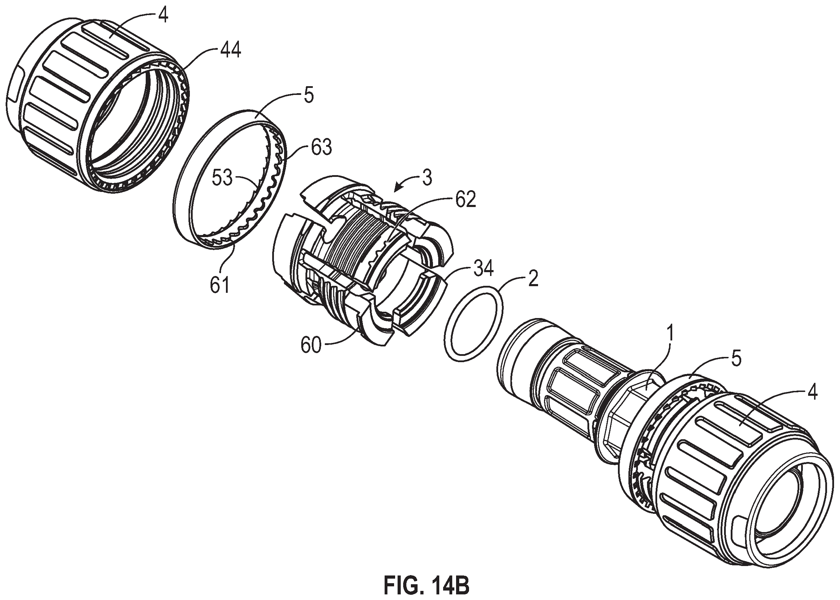

A comparison of Figures 4A and 4B with Figures 14A and 14B shows that the assembly sequence is different in the second connector. In particular, the transparent ring 5 is now assembled over the body 1 after the collet has been put in place. The collet 3 is provided at its distal end with at least one frangible outwardly extending flange 60 which receives a complementary shoulder 61 on the transparent ring 5 to prevent further distal axial movement of the transparent ring 5.

The locking cap 4 is shown in the fully locked position in Figures 16 and 16A. Just before reaching this position, the recesses 44 and teeth 53 engage one another to provide a tactile/audible indication of the locked position as described above. However, if the locking cap is overtightened from this position, and in this example, there is no stop to prevent this, the locking cap 4 forces the transparent ring 5 further to the right in Figures 16 and 16A until the shoulder 61 lands on frangible outwardly extending flange 60. Further movement of the locking cap 4 pushes transparent ring 5 against the frangible outwardly extending flange 60 and either pushes it out of the way or breaks it off. As a result, there is nothing to keep the transparent ring 5 on the collet 3, so the transparent ring 5 falls off the end of the collet 3 and is loosely retained around the body 1.

The operator should be aware of this from the letting go of the frangible outwardly extending flanges 60 and by the fact that the transparent ring is now no longer on the collet 3 but is loose around the body 1. As such they alerted to the fact that a problem has occurred with the connection process. If this is not picked up at this stage, the presence of the dislodged transparent ring 5 can be picked up in a subsequent inspection. In any event, the transparent ring 5 is dislodged before the locking cap 4 can be tightened to the extent that it will damage the threads 31, 40. As such, the connector would still function in this condition. The geometry of the collet 3 and locking cap 4 can be such that the resistance between the two reaches a level at which the locking cap 4 can be advanced no further under any practically applicable force such that the two cannot, in practice, be tightened enough that the threads 31, 40 can be damaged.

In order prevent relative rotation between the collet 3 and transparent ring 5, the distal end of the collet 3 has projections 62 which key into recesses 63 formed on shoulder 61. Also to prevent relative rotation of the collet 3 with respect to the body 1, the body 1 has projections 64 which sit in the axial slots 34. Thus, the body 1, collet 3 and transparent ring 5 cannot rotate relatively to one another.

### CLAUSES

1. A pipe connector comprising:
   a hollow body having a central throughway defining an axis, the body comprising a tubular part at at least one end, the tubular part having an outer face to seal, in use, with an inner diameter of a pipe placed over the tubular part:
   a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread;
      a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
   wherein the collet has at least one axially extending through slot extending proximally from its distal end: and
   a transparent ring retained at the distal end of the collet, such that, when the locking cap is in the locked configuration and the pipe is fully inserted, the pipe is visible, in use, through the through slot and transparent ring.
2. A pipe connector according to clause 1, wherein the outer surface of the transparent ring is an inclined surface facing the pipe, in use, with the locking cap in the locked configuration and with the pipe fully inserted.
3. A pipe connector according to clause 1 or clause 2, wherein the locking cap, in the locked configuration does not extend distally past the distal end of the cavity.
4. A pipe connector comprising:
   a hollow body having a central throughway defining an axis, the body comprising a tubular part at at least one end, the tubular part having an outer face to seal, in use, with an inner diameter of a pipe placed over the tubular part:
   a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
      a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
   wherein the collet has at least one axially extending through slot extending proximally from its distal end, and:
      wherein the locking cap, in the locked configuration does not extend distally past the distal end of the cavity allowing the pipe to be visible, in use, through the through slot when the locking cap is in the locked configuration.
5. A pipe connector comprising:
   a hollow body having a central throughway defining an axis, the body comprising a tubular part at at least one end, the tubular part having an outer face to seal, in use, with an inner diameter of a pipe placed over the tubular part:
   a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
      a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
   the locking cap having a first proximal stop face at a proximal end and a first distal stop face at a distal end,
   complementary proximal and distal second stop faces are fixed with respect to the hollow body, wherein the first stop faces engage with the respective second stop faces when the locking cap reaches the locked configuration to prevent further movement of the locking cap onto the body.
6. A pipe connector according to clause 5, wherein the locking cap is provided with interference features which are radially spaced from the first distal stop face and which engage with complementary features which are fixed with respect to the hollow body to provide a tactile force as the locking cap approaches the locked configuration.
7. A pipe connector according to clause 5 or clause 6, wherein the collet has at least one axially extending through slot extending proximally from its distal end: and further comprising a transparent ring extending between the hollow body and the distal end of the locking cap when the locking cap is in the locked configuration allowing the pipe to be visible, in use, through the through slot and transparent ring when the locking cap is in the locked configuration.
8. A pipe connector according to clause 7, wherein the distal second stop face is provided on the transparent ring.
9. A pipe connector comprising:
   a hollow body having a central throughway defining an axis, the body comprising a tubular part at at least one end, the tubular part having an outer face to seal, in use, with an inner diameter of a pipe placed over the tubular part:
   a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread;
   a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
   a ring retained on the outer face of a distal end of the collet by at least one frangible element on the collet, the ring being positioned such that it will break the frangible element and be pushed off the collet when the locking cap reaches a position beyond a fully locked position, but before a position in which the locking cap deforms the first screw thread.
10. A pipe connector according to clause 9, wherein the ring is a transparent ring.
11. A pipe connector according to clause 9 or 10, wherein the locking cap is provided with interference features which are radially spaced which engage with complementary features which are fixed with respect to the hollow body to provide a tactile force as the locking cap approaches the locked configuration.
12. A pipe connector comprising:
   a hollow body having a central throughway defining an axis, the body comprising a tubular part at at least one end, the tubular part having an outer face to seal, in use, with an inner diameter of a pipe placed over the tubular part:
   a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
   a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
   wherein the locking cap is provided on its outer face with a plurality of axial grooves for receiving a tool, the grooves having a closed distal end and an open proximal end and having a constant depth between the distal and proximal ends.
13. A pipe connector according to any preceding clause, wherein one or more of the hollow body, collet and locking cap is made of plastic.
14. A pipe connector according to any preceding clause, wherein the locking cap is captive on the collet.
15. A pipe connector according to any preceding clause, wherein the inner face of the collet has at least one tooth to grip the pipe, in use.
16. A pipe connector according to any preceding clause, wherein, in use, in the locked configuration, there is no axial movement between the body, collet, locking cap and pipe.
17. A pipe connector according to any preceding clause, wherein the connector is capable of maintaining the seal when exposed to a continuous temperature of 70°C, preferably 80°C and more preferably 90°C.
18. A pipe connector according to any preceding clause, wherein at least one of the body, collet and locking cap have a tensile modulus of greater than 2000Mpa and a heat distortion temperature of greater than 200°C.
19. A pipe connector according to any preceding clause, wherein all of the body, collet and locking cap have a tensile modulus of greater than 2000Mpa.
20. A pipe connector according to any preceding clause, wherein the locking cap is devoid of opposing flat surfaces.
21. A pipe connector according to any preceding clause, wherein no part of the locking cap has a hexagonal cross section in a radial plane.
22. A pipe connector according to any preceding clause, wherein, the collet is the same colour as the locking cap.
23. A pipe connector according to any preceding clause, wherein, the collet is black.

## Claims

1. A pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
wherein the collet has at least one axially extending through slot extending proximally from its distal end, and:
wherein the locking cap, in the locked configuration does not extend distally past the distal end of the cavity allowing the pipe to be visible, in use, through the through slot when the locking cap is in the locked configuration.

2. A pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
the locking cap having a first proximal stop face at a proximal end and a first distal stop face at a distal end,
complementary proximal and distal second stop faces are fixed with respect to the hollow body, wherein the first stop faces engage with the respective second stop faces when the locking cap reaches the locked configuration to prevent further movement of the locking cap onto the body.

3. A pipe connector according to claim 2, wherein the locking cap is provided with interference features which are radially spaced from the first distal stop face and which engage with complementary features which are fixed with respect to the hollow body to provide a tactile force as the locking cap approaches the locked configuration.

4. A pipe connector according to claim 2 or claim 3, wherein the collet has at least one axially extending through slot extending proximally from its distal end: and further comprising a transparent ring extending between the hollow body and the distal end of the locking cap when the locking cap is in the locked configuration allowing the pipe to be visible, in use, through the through slot and transparent ring when the locking cap is in the locked configuration.

5. A pipe connector according to claim 4, wherein the distal second stop face is provided on the transparent ring.

6. A pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread;
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
a ring retained on the outer face of a distal end of the collet by at least one frangible element on the collet, the ring being positioned such that it will break the frangible element and be pushed off the collet when the locking cap reaches a position beyond a fully locked position, but before a position in which the locking cap deforms the first screw thread.

7. A pipe connector according to claim 6, wherein the ring is a transparent ring.

8. A pipe connector according to claim 6 or 7, wherein the locking cap is provided with interference features which are radially spaced which engage with complementary features which are fixed with respect to the hollow body to provide a tactile force as the locking cap approaches the locked configuration.

9. A pipe connector comprising:
a hollow body having a central throughway defining an axis, the body comprising a tubular part at at least one end, the tubular part having an outer face to seal, in use, with an inner diameter of a pipe placed over the tubular part:
a collet fitted over the tubular part of the body so as to be axially fixed with respect to the body and being spaced from the tubular part to form a cavity for the pipe, the inner face of the collet being configured to grip the pipe, in use, and the outer face of the collet having a first screw thread; and
a locking cap having an inner face with a second screw thread which is complementary to the first screw thread, wherein screwing the locking cap onto the collet from an unlocked configuration to a locked configuration causes inward deflection of the collet to press, in use, the collet onto the pipe and the pipe onto the tubular part to seal the interface between the body and the pipe;
wherein the locking cap is provided on its outer face with a plurality of axial grooves for receiving a tool, the grooves having a closed distal end and an open proximal end and having a constant depth between the distal and proximal ends.

10. A pipe connector according to any preceding claim, wherein one or more of the hollow body, collet and locking cap is made of plastic.

11. A pipe connector according to any preceding claim, wherein the locking cap is captive on the collet.

12. A pipe connector according to any preceding claim, wherein the inner face of the collet has at least one tooth to grip the pipe, in use.

13. A pipe connector according to any preceding claim, wherein, in use, in the locked configuration, there is no axial movement between the body, collet, locking cap and pipe.

14. A pipe connector according to any preceding claim, wherein the connector is capable of maintaining the seal when exposed to a continuous temperature of 70°C, preferably 80°C and more preferably 90°C.

15. A pipe connector according to any preceding claim, wherein at least one of the body, collet and locking cap have a tensile modulus of greater than 2000Mpa and a heat distortion temperature of greater than 200°C.

16. A pipe connector according to any preceding claim, wherein all of the body, collet and locking cap have a tensile modulus of greater than 2000Mpa.

17. A pipe connector according to any preceding claim, wherein the locking cap is devoid of opposing flat surfaces.

18. A pipe connector according to any preceding claim, wherein no part of the locking cap has a hexagonal cross section in a radial plane.

19. A pipe connector according to any preceding claim, wherein, the collet is the same colour as the locking cap.

20. A pipe connector according to any preceding claim, wherein, the collet is black.
